# EUROPEAN PATENT SPECIFICATION

(11) **EP 1 592 303 B1**
(45) Date of publication and mention of the grant of the patent: **06.05.2009**
(21) Application number: 04701396.6
(22) Date of filing: 12.01.2004
(51) Int. Cl.: A01N 57/34, A01N 25/30, A01N 25/08, A01N 25/04, D21H 21/36, D21H 19/46, D21H 19/58, D21H 19/64, C09C 1/02, C04B 14/28

(54) **TREATING SLURRIES**
SCHLAMMBEHANDLUNG
TRAITEMENT DE BOUES

(30) Priority: 29.01.2003 GB 0301975
(43) Date of publication of application: 09.11.2005
(73) Proprietor: Rhodia Consumer Specialties Limited, Watford, Hertfordshire WD24 4QP (GB)
(72) Inventor: JONES, Christopher, Raymond, Nr Walsall, South Staffordshire WS6 7BS (GB)
(74) Representative: Johnson, Yvonne Catherine
(86) International application number: PCT/GB2004/000056
(87) International publication number: WO 2004/066731

(56) References cited:
- EP-A- 0 491 391
- EP-A- 0 839 956
- EP-A- 1 160 201
- WO-A-00/04777
- WO-A-02/08127
- WO-A-99/33345
- US-A- 3 597 251
- US-A- 3 945 843
- US-A- 4 673 509
- US-B1- 6 180 056

## Description

This invention relates to a composition for treating inorganic slurries and to a method of treating inorganic slurries with the aforesaid composition so as to maintain the slurries in a substantially homogeneous phase.

The present invention will be described herein with particular reference to calcium carbonate-based slurries, especially those used in paper-making processes, although it is not to be construed as being limited thereto.

Most inorganic slurries contain about 70% to 80% by weight of solids. Many inorganic slurries (particularly those based on calcium carbonate) are known to be susceptible to bacterial contamination and it has been the practice to add one or more biocidally-active materials to the slurries in order to minimise such contamination.

Phosphorus-containing compounds, in particular tetrakis(hydroxyorgano)phosphonium salts (THP* salts) are known to be effective biocides. Experimental work carried out by the applicants has shown, for example, that the addition of a solution of tetrakis(hydroxymethyl)phosphonium sulphate (THPS) to a calcium carbonate-based slurry can give rise to a reduction in bacterial count of 10⁴ in 2 hours.

However, it is also known that addiction of THPS alone to a slurry results in instantaneous heterogeneous thickening and aggregation of the slurry.

WO00/04777 discloses synergistic antimicrobial combinations comprising an effective amount of peracetic acid (PAA) and an effective amount of a phosphorus compound selected from the group consisting of tetrakis (hydroxy methyl) phosphonium sulfate (THPS), tetrakis (hydroxy methyl) phosphonium phosphate (THPP), and tetrakis (hydroxy methyl) phosphonium chloride (THPC),

US 4673509 describes inhibition of the growth of microbiological contaminants in industrial cooling and process waters and in aqueous based products, susceptible to microbiological spoilage on storage, by the presence of a phosphorus compound having a hydroxy alkyl group directly attached to the phosphorus atom, such as tetrakis hydroxy methyl phosphonium sulphate.

EP 0839956 discloses a method of dispersing a solid particulate material in an aqueous medium by addition to the aqueous medium of a dispersing agent wherein the solid particulate material is to be used as a filler or pigment in a sheet material which is required to come into contact with foodstuffs, wherein the dispersing agent is a composition comprising: (1) up to 0.25% by weight, based on the dry weight of the particulate solid material, of a water-soluble salt of a poly(acrylic acid) having a weight average molecular weight not greater than 20,000, and (2) from 0.02% to 1.5% by weight, based on the dry weight of the particulate solid material, of either (a) an anionic polyelectrolyte which comprises a water-soluble salt of a copolymer of acrylic acid with acrylamide; or (b) a water-soluble condensed phosphate salt.

US 3597251 describes an aqueous calcium carbonate slurry comprising calcium carbonate and water, wherein the slurry contains from about 0.05 to 0.5% by weight zinc oxide and/or zirconium oxide, from about 0.2 to 2.0% by weight complex phosphate material and about 0.05 to 1.5% by weight organic polymer.

US 3945843 relates to an improved method for rapidly dispersing high solids suspensions, such as calcium carbonate slurries, using a copolymer of methyl acrylate and acrylic acid alone or along with sodium polyphosphates.

EP 1160201 relates to a process for the preparation of a precipitated calcium carbonate (PCC) composition, comprising the steps of wet grinding an aqueous slurry of PCC, said grinding being done in a plurality of separate grinding stages; partially dewatering said ground PCC slurry in the presence of an organic dispersant in a solid bowl centrifuge; and subjecting said centrifuge PCC slurry in the presence of an organic dispersant to fluid shearing forces in a rotor and stator mixer.

EP 0491391 describes the reaction of unsaturated compounds which can be dissolved in aqueous based solvents, such as ethylenic or acetylenic carboxylate or alcohols with less than 10 carbon atoms, especially maleic and/or acrylic acid or propargyl alcohol, with alkali metal phosphite in aqueous solution at neutral or alkaline pH in the presence of free radical initiators, such as per sulphate, to form threshold scale and corrosion inhibitors.

The applicants have found that the use of a composition comprising a THP* salt and a dispersant will provide continuing preservation against bacterial contamination, while at the same time maintaining the slurry in a substantially homogeneous phase.

Accordingly, in a first aspect, the present invention provides the use of a composition comprising:
(a) a tetrakis(hydroxyorgano)phosphonium salt (herein THP⁺ salt) selected from tetrakis (hydroxymethyl) phosphonium sulphate, tetrakis (hydroxymethyl) phosphonium chloride, tetrakis (hydroxymethyl) phosphonium phosphate, tetrakis (hydroxymethyl) phosphonium nitrate and tetrakis (hydroxymethyl) phosphonium oxalate; and
(b) a dispersant selected from the group consisting of:
   (i) phosphonated compounds containing at least one tertiary nitrogen atom; and
   (ii) homopolymers of unsaturated acids;
   for treating an inorganic slurry to maintain the slurry in a substantially homogeneous phase and to preserve the slurry against bacterial contamination.

In accordance with the present invention, the THP* salt is preferably tetrakis(hydroxymethyl)phosphonium sulphate.

Alternatively, the THP⁺ salt may be tetrakis(hydroxymethyl)phosphonium chloride, phosphate, nitrate or oxalate.

A preferred example of a dispersant of the type (b) (i) is a compound having one tertiary nitrogen atom, such as a sodium salt of nitrilo-tris(methylene phosphate), particularly the tetra-sodium salt.

Preferred example of dispersants of the type (b)(ii) include those oligomers having the general H(CH₂OM.CH₃OM)ₙPO₃M₂, wherein M is a cationic species such that the oligomer is soluble in water and n is a number greater than 1.

Other suitable oligomers are disclosed in the applicant's European Patent Specification 0 491 391.

A preferred example of a dispersant of the type (b)(iii) is a homopolymer of acrylic acid, especially a homopolymer having a molecular weight in the range 2000 to 5000.

Preferred examples of dispersants of the type b(iv) include sodium tripolyphosphate.

In a second aspect, the present invention provides a composition for treating an inorganic slurry, the composition comprising:
(a) a tetrakis (hydroxyorgano) phosphonium salt (herein THP⁺ salt) selected from tetrakis (hydroxymethyl) phosphonium sulphate, tetrakis (hydroxymethyl) phosphonium chloride, tetrakis (hydroxymethyl) phosphonium phosphate, tetrakis (hydroxymethyl) phosphonium nitrate and tetrakis (hydroxymethyl) phosphonium oxalate; and
(b) a dispersant which is the tetra sodium salt of nitrilo-tris (methylene phosphonate).

In a third aspect, the present invention provides a composition for treating an inorganic slurry, the composition comprising:
(a) a tetrakis(hydroxymethyl)phosphonium salt (herein THP* salt) selected from tetrakis (hydroxymethyl) phosphonium sulphate, tetrakis (hydroxymethyl) phosphonium chloride, tetrakis (hydroxymethyl) phosphonium phosphate, tetrakis (hydroxymethyl) phosphonium nitrate and tetrakis (hydroxymethyl) phosphonium oxalate; and
(b) a dispersant which is a homopolymer of acrylic acid, the homopolymer having a molecular weight in the range of 2,000 to 5,000.

In a fourth aspect, the present invention provides a method of treating an inorganic slurry to maintain the slurry in a substantially homogeneous phase and to preserve the slurry against bacterial contamination, the method comprising: the addition to the slurry of an effective amount of a composition according to the second or third aspect of the present invention.

The inorganic slurry may, for example, comprise a calcium carbonate-based slurry.

Alternatively, the inorganic slurry may comprise a pigment slurry, a clay slurry or a cement slurry.

Preferably, the ratio of THP⁺ salt to dispersant in the composition is about 2:1 (as active ingredients).

Suitably, the composition may be added to the slurry in an amount in the range 10ppm to 1000ppm (by weight of the slurry), for example about 750ppm (by weight of the slurry).

The present invention will be illustrated by way of the following examples.

In the examples, a 75% calcium carbonate slurry (commercially known as Setacarb) was treated with:
**Example 1** : THP+ salt alone.
**Example 2** : THP⁺ salt and dispersant of type (b)(i).
**Example 3** . THP⁺ salt and dispersant of type (b)(ii).

The amounts of each additive used, and the results, are given in the TABLE below.

**TABLE**

| Example No. | THP⁺ salt (ppm) | Dispersant (ppm) | Result |
|---|---|---|---|
| 1 | (a) THPS | (b) (nil) | Instant heterogeneous |
| | 750ppm | | thickening |
| 2 | (a) THPS | b(i) | No thickening |
| | 750ppm | 375ppm | |
| 3 | (a) THPS | b(ii) | No thickening |
| | 750ppm | 375ppm | |

| | | | |
|---|---|---|---|
| Notes to TABLE (a) An aqueous solution of tetrakis(hydroxymethyl)phosphonium sulphate (75% a.i.), available as TOLCIDE®-PS75. (b) (i) An aqueous solution of the tetra sodium salt of nitrilo-tris(methylene phosphonic acid), available as BRIQUET® 301-32S. (b) (ii) A homopolymer of polyacrylic acid, having a molecular weight in the range 2000-5000 and available as BEVALOID®211. | | | |

## Claims

1. Use of a composition comprising:
(a) a tetrakis(hydroxyorgano)phosphonium salt (herein THP+ salt) selected from tetrakis (hydroxymethyl) phosphonium sulphate, tetrakis (hydroxyethyl) phosphonium chloride, tetrakis (hydroxymethyl) phosphonium, phosphate, tetrakis (hydroxymethyl) phosphonium nitrate and tetrakis (hydroxymethyl) phosphonium oxalate; and
(b) a dispersant selected from the group consisting of:
(i) phosphonated compounds containing at least one tertiary nitrogen atom; and
(ii) homopolymers of unsaturated acids;
for treating an inorganic slurry to maintain the slurry in a substantially homogeneous phase and to preserve the slurry against bacterial contamination.

2. Use according to Claim 1, in which the THP* salt is tetrakis (hydroxymethyl)phosphonium sulphate.

3. Use according to Claim 1, in which the THP+ salt is tetrakis(hydroxymethyl)phosphonium chloride, phosphate, nitrate or oxalate.

4. Use according to any one of Claims 1 to 3, in which the dispersant (b(i)) is a phosphonated compound containing one tertiary nitrogen atom.

5. Use according to Claim 4, in which the dispersant (b(i)) is a sodium salt of nitrilo-tris(methylene phosponate).

6. Use according to Claim 5, in which the salt is the tetra-sodium salt.

7. Use according to any one of Claims 1 to 3, in which the dispersant (b(ii)) is a homopolymer of acrylic acid.

8. Use according to Claim 7, in which the homopolymer has a molecular weight in the range 2000 to 5000.

9. Use according to any one of Claims 1 to 8 in which the ratio of THP+ salt to dispersant in the composition is about 2:1 as active ingredients.

10. Use according to any one of Claims 1 to 8, in which the composition is added to the slurry in an amount in the range 10ppm to 1000ppm by weight of the slurry.

11. Use according to Claim 10, in which the composition is added to the slurry in an amount of about 750ppm by weight of the slurry.

12. Use according to any one of Claims 1 to 11, in which the slurry comprises a calcium carbonate-based slurry.

13. Use according to any one of Claims 1 to 11, in which the slurry comprises a pigment slurry, a clay slurry or a cement slurry.

14. A composition for treating an inorganic slurry, the composition comprising:
(a) a tetrakis (hydroxyorgano) phosphonium salt (herein THP+ salt) selected from tetrakis (hydroxymethyl) phosphonium sulphate, tetrakis (hydroxyethyl) phosphonium chloride, tetrakis (hydroxyethyl) phosphonium phosphate, tetrakis (hydroxymethyl) phosphonium nitrate and tetrakis (hydroxymethyl) phosphonium oxalate; and
(b) a dispersant which is the tetra sodium salt of nitrilo-tris (methylene phosphonate).

15. A composition for treating an inorganic slurry, the composition comprising:
(a) a tetrakis(hydroxymethyl)phosphonium salt (herein THP+ salt) selected from tetrakis (hydroxymethyl) phosphonium, sulphate, tetrakis. (hydroxymethyl) phosphonium chloride, tetrakis (hydroxymethyl) phosphonium phosphate, tetrakis (hydroxymethyl) phosphonium nitrate and tetrakis (hydroxymethyl) phosphonium oxalate; and
(b) a dispersant which is a homopolymer of acrylic acid, the homopolymer having a molecular weight in the range of 2,000 to 5.000.

16. A composition according to Claim 14 or 15, wherein the THP⁺ salt is tetrakis(hydroxymethyl)phosphonium sulphate.

17. A method of treating an inorganic slurry to maintain the slurry in a substantially homogeneous phase and to preserve the slurry against bacterial contamination, comprising the addition to the slurry of an effective amount of a composition according to any one of Claims 14 to 16.

## Patentansprüche

1. Verwendung einer Zusammensetzung, umfassend:
(a) ein Tetrakis(hydroxyorgano)phosphoniumsalz (hierin THP⁺-Salz) ausgewählt aus Tetrakis(hydroxymethyl)phosphoniumsulfat, Tetrakis(hydroxymethyl)phosphoniumchlorid, Tetrakis(hydroxymethyl)phosphoniumphosphat, Tetrakis(hydroxymethyl)phosphoniumnitrat und Tetrakis(hydroxymethyl)phosphoniumoxalat; und
(b) ein Dispergiermittel, ausgewählt aus der Gruppe bestehend aus:
(i) phosphonierten Verbindungen, die wenigstens ein tertiäres Stickstoffatom enthalten; und
(ii) Homopolymeren ungesättigter Säuren;
zur Behandlung eines anorganischen Schlammes, um den Schlamm in einer im Wesentlichen homogenen Phase zu halten und um den Schlamm gegen bakterielle Kontamination zu schützen.

2. Verwendung nach Anspruch 1, bei der das THP⁺-Salz Tetrakis(hydroxymethyl)phosphoniumsulfat ist.

3. Verwendung nach Anspruch 1, bei der das THP⁺-Salz Tetrakis(hydroxymethyl)phosphoniumchlorid, -phosphat, -nitrat oder -oxalat ist.

4. Verwendung nach einem der Ansprüche 1 bis 3, bei der das Dispergiermittel (b(i)) eine phosphonierte Verbindung ist, die ein tertiäres Stickstoffatom enthält.

5. Verwendung nach Anspruch 4, bei der das Dispergiermittel (b(i)) ein Natriumsalz von Nitrilo-tris(methylenphosphonat) ist.

6. Verwendung nach Anspruch 5, bei der das Salz das Tetranatriumsalz ist.

7. Verwendung nach einem der Ansprüche 1 bis 3, bei der das Dispergiermittel (b(ii)) ein Homopolymer von Acrylsäure ist.

8. Verwendung nach Anspruch 7, bei der das Homopolymer ein Molekulargewicht im Bereich von 2000 bis 5000 aufweist.

9. Verwendung nach einem der Ansprüche 1 bis 8, bei der das Verhältnis von THP⁺-Salz zu Dispergiermittel in der Zusammensetzung als wirksame Bestandteile etwa 2:1 beträgt.

10. Verwendung nach einem der Ansprüche 1 bis 8, bei der die Zusammensetzung dem Schlamm in einer Menge im Bereich von 10 ppm bis 1000 ppm bezogen auf das Gewicht des Schlammes zugesetzt wird.

11. Verwendung nach Anspruch 10, bei der die Zusammensetzung dem Schlamm in einer Menge von etwa 750 ppm bezogen auf das Gewicht des Schlammes zugesetzt wird.

12. Verwendung nach einem der Ansprüche 1 bis 11, bei der der Schlamm einen calciumcarbonat-basierten Schlamm umfasst.

13. Verwendung nach einem der Ansprüche 1 bis 11, bei der der Schlamm einen Pigmentschlamm, einen Tonschlamm oder einen Zementschlamm umfasst.

14. Zusammensetzung zur Behandlung eines anorganischen Schlammes, wobei die Zusammensetzung umfasst:
(a) ein Tetrakis(hydroxyorgano)phosphoniumsalz (hierin THP⁺-Salz), ausgewählt unter Tetrakis(hydroxymethyl)phosphoniumsulfat, Tetrakis(hydroxymethyl)phosphoniumchlorid, Tetrakis(hydroxymethyl)phosphoniumphosphat, Tetrakis(hydroxymethyl)phosphoniumnitrat und Tetrakis(hydroxymethyl)phosphoniumoxalat; und
(b) ein Dispergiermittel, das das Tetranatriumsalz von Nitrilo-tris(methylenphosphonat) ist.

15. Zusammensetzung zur Behandlung eines anorganischen Schlammes, wobei die Zusammensetzung umfasst:
(a) ein Tetrakis(hydroxymethyl)phosphoniumsalz (hierin THP⁺-Salz), ausgewählt unter Tetrakis(hydroxymethyl)phosphoniumsulfat, Tetrakis(hydroxymethyl)phosphoniumchlorid, Tetrakis(hydroxymethyl)phosphoniumphosphat, Tetrakis(hydroxymethyl)phosphoniumnitrat und Tetrakis(hydroxymethyl)phosphoniumoxalat; und
b) ein Dispergiermittel, das ein Homopolymer von Acrylsäure ist, wobei das Homopolymer ein Molekulargewicht im Bereich von 2.000 bis 5.000 aufweist.

16. Zusammensetzung nach Anspruch 14 oder 15, wobei das THP⁺-Salz Tetrakis(hydroxymethyl)phosphoniumsulfat ist.

17. Verfahren zur Behandlung eines anorganischen Schlammes, um den Schlamm in einer im Wesentlichen homogenen Phase zu halten und um den Schlamm gegen bakterielle Kontamination zu schützen, umfassend die Zugabe einer wirksamen Menge einer Zusammensetzung nach einem der Ansprüche 14 bis 16 zum Schlamm.

## Revendications

1. Utilisation d'une composition comprenant :
(a) un sel de tétrakis (hydroxyorgano) phosphonium (ici sel THP+) choisi dans le groupe comprenant le sulfate de tétrakis (hydroxyméthyl) phosphonium, le chlorure de tétrakis (hydroxyméthyl) phosphonium, le phosphate de tétrakis (hydroxyméthyl) phosphonium, le nitrate de tétrakis (hydroxyméthyl) phosphonium et l'oxalate de tétrakis (hydroxyméthyl) phosphonium ; et
(b) un dispersant choisi dans le groupe comprenant :
(i) des composés phosphonates comprenant au moins un atome d'azote tertiaire ; et
(ii) des homopolymères d'acides insaturés ;
pour le traitement d'une boue inorganique afin de maintenir la boue en phase substantiellement homogène et de préserver la boue de la contamination bactérienne.

2. Utilisation selon la revendication 1, dans laquelle le sel THP+ est du sulfate de tétrakis (hydroxyméthyl) phosphonium.

3. Utilisation selon la revendication 1, dans laquelle le sel THP+ est du chlorure, du phosphate, du nitrate ou de l'oxalate de tétrakis (hydroxyméthyl) phosphonium.

4. Utilisation selon l'une quelconque des revendications 1 à 3, dans laquelle le dispersant (b(i)) est un composé phosphonate comprenant un atome d'azote tertiaire.

5. Utilisation selon la revendication 4, dans laquelle le dispersant (b(i)) est un sel de sodium de nitrilo-tris (méthylène phosphonique).

6. Utilisation selon la revendication 5, dans laquelle le sel est le sel de tétrasodium.

7. Utilisation selon l'une quelconque des revendications 1 à 3, dans laquelle le dispersant (b(ii)) est un homopolymère d'acide acrylique.

8. Utilisation selon la revendication 7, dans laquelle l'homopolymère présente une masse moléculaire comprise entre 2000 et 5000.

9. Utilisation selon l'une quelconque des revendications 1 à 8, dans laquelle la rapport entre le sel THP+ et le dispersant en tant qu'ingrédients actifs dans la composition est d'environ 2 pour 1.

10. Utilisation selon l'une quelconque des revendications 1 à 8, dans laquelle on ajoute la composition à la boue dans une quantité comprise entre 10 ppm et 1000 ppm en fonction du poids de la boue.

11. Utilisation selon la revendication 10, dans laquelle on ajoute la composition à la boue dans une quantité d'environ 750 ppm, en fonction du poids de la boue.

12. Utilisation selon l'une quelconque des revendications 1 à 11, dans laquelle la boue comprend de la boue à base de carbonate de calcium.

13. Utilisation selon l'une quelconque des revendications 1 à 11, dans laquelle la boue comprend une boue de pigment, une boue d'argile ou une boue de ciment.

14. Composition pour le traitement d'une boue inorganique, la composition comprenant :
(a) un sel de tétrakis (hydroxyorgano) phosphonium (ici sel THP+) choisi dans le groupe comprenant le sulfate de tétrakis (hydroxyméthyl) phosphonium, le chlorure de tétrakis (hydroxyméthyl) phosphonium, le phosphate de tétrakis (hydroxyméthyl) phosphonium, le nitrate de tétrakis (hydroxyméthyl) phosphonium et l'oxalate de tétrakis (hydroxyméthyl) phosphonium ; et
(b) un dispersant qui est le sel de tétrasodium de nitrilo-tris (méthylène phosphonique).

15. Composition pour le traitement d'une boue inorganique, la composition comprenant :
(a) un sel de tétrakis (hydroxyméthyl) phosphonium (ici sel THP+) choisi dans le groupe comprenant le sulfate de tétrakis (hydroxyméthyl) phosphonium, le chlorure de tétrakis (hydroxyméthyl) phosphonium, le phosphate de tétrakis (hydroxyméthyl) phosphonium, le nitrate de tétrakis (hydroxyméthyl) phosphonium et l'oxalate de tétrakis (hydroxyméthyl) phosphonium ; et
(b) un dispersant qui est un homopolymère d'acide acrylique, l'homopolymère présentant une masse moléculaire comprise entre 2000 et 5000.

16. Composition selon la revendication 14 ou 15, dans laquelle le sel THP+ est le sulfate de tétrakis (hydroxyméthyl) phosphonium.

17. Procédé de traitement d'une boue inorganique afin de maintenir la boue en phase substantiellement homogène et de préserver la boue de la contamination bactérienne, comprenant l'ajout d'une quantité effective d'une composition selon l'une quelconque des revendications 14 à 16 dans la boue.
